# EUROPÄISCHE PATENTSCHRIFT

(11) **EP 2 670 550 B1**
(45) Veröffentlichungstag und Bekanntmachung des Hinweises auf die Patenterteilung: **10.08.2016**
(21) Anmeldenummer: 12705973.1
(22) Anmeldetag: 01.02.2012
(51) Int. Cl.: B23B 51/00, B23B 51/02

(54) **BOHRWERKZEUG UND VERFAHREN ZUR HERSTELLUNG VON BOHRUNGEN**
DRILLING TOOL AND METHOD FOR MAKING HOLES
OUTIL DE FORAGE ET PROCEDE DE FABRICATION DE TROUS

(30) Priorität: 02.02.2011 DE 102011010821; 13.04.2011 DE 102011016960
(43) Veröffentlichungstag der Anmeldung: 11.12.2013
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2012/000425
(87) Internationale Veröffentlichungsnummer: WO 2012/104066

(56) Entgegenhaltungen:
- EP-A2- 2 239 075
- WO-A1-2008/119320
- DE-A1-102006 025 294
- DE-U1-202009 017 409
- US-A- 1 747 117
- US-A- 4 720 218
- US-A- 5 000 630

## Beschreibung

Die Erfindung betrifft ein Bohrwerkzeug gemäß Oberbegriff des Anspruchs 1 und ein Verfahren zur Herstellung von Bohrungen gemäß Oberbegriff des Anspruchs 7, siehe z.B. WO 2008/119320 A1 , EP 2239075 A2, DE 202009017409 U1, US 1 747 117 A, DE 10 2006 025 294, US 4 720 218 A1.

Bohrwerkzeuge und Verfahren zur Herstellung von Bohrungen, insbesondere in Verbundmaterialien, sind bekannt. Materialverbundwerkstoffe bestehen aus mindestens zwei Lagen verschiedener Materialien. Dabei besteht mindestens eine Lage vorzugsweise aus faserverstärktem Kunststoff, insbesondere kohlefaserverstärktem Kunststoff (CFK). Mindestens eine zweite Lage besteht bevorzugt aus Metall, insbesondere aus Aluminium oder Titan. Solche Verbundmaterialien kommen insbesondere dort zum Einsatz, wo bei möglichst geringem Gewicht hohe Lasten übertragen werden sollen. Dies können beispielsweise Verbindungsstellen zwischen Strukturbauteilen oder andere hochbelastete Stellen beispielsweise in Flugzeugkonstruktionen sein. Entsprechend werden Verbundmaterialien vor allem, aber keinesfalls ausschließlich in der Luftfahrtindustrie genutzt. Es hat sich gezeigt, dass es aufgrund der verschiedenen spezifischen Zerspanungseigenschaften und anderen physikalischen Parametern der verschiedenen Materiallagen in den auch als Stacks bekannten Verbundmaterialien kaum möglich ist, Bohrungen herzustellen, deren Durchmesser in den einzelnen Schichten hinreichend genau bestimmt ist. Insbesondere die verschiedene Elastizität der einzelnen Werkstoffe führt dazu, dass eine durch verschiedene Schichten verlaufende Bohrung in den einzelnen Schichten nicht denselben Durchmesser aufweist. Dabei kann insbesondere eine eng tolerierte Bohrung in mindestens einer Lage aus der Toleranz fallen. Selbst wenn die Bohrung zunächst auf ein geringeres Maß vorgebohrt und dann in bekannter Weise auf das Endmaß fertiggerieben wird, ist eine Abweichung des Durchmessers in den einzelnen Materiallagen zu beobachten, was insbesondere bei sehr eng tolerierten Bohrungen störend ist. Nachteilig an einem solchen Verfahren ist außerdem, dass hierbei zwei Arbeitsschritte anfallen. Beim Reiben tritt zusätzlich das Problem auf, dass typische Reibwerkzeuge nur kleine Spanräume aufweisen, während Verbundmaterialien häufig zähe Schichten umfassen, bei deren Zerspanung lange Späne entstehen. Dies ist beispielsweise bei Aluminium der Fall. Insbesondere wenn der Durchmesser der zu reibenden Bohrung klein ist können lange Späne die Spanräume des Reibwerkzeugs verstopfen und/oder die Oberfläche der Bohrung beschädigen. Dasselbe Problem tritt auch bei Bohrreibahlen auf, also kombinierten Bohr-Reibwerkzeugen. Im Allgemeinen sind hier die Spanräume noch kleiner als bei reinen Reibwerkzeugen.

Der Erfindung liegt daher die Aufgabe zugrunde, ein Bohrwerkzeug und ein Verfahren zur Herstellung von Bohrungen insbesondere in Verbundmaterialien zu schaffen, welche die genannten Nachteile vermeiden. Insbesondere soll es möglich sein, in Verbundmaterialien Bohrungen herzustellen, die durchgehend einen konstanten Durchmesser innerhalb enger Toleranzen aufweisen. Die Bohrung soll in nur einem Arbeitsgang herstellbar sein, und das Bohrwerkzeug soll auch in sehr abrasiven, beispielsweise faserverstärkten Materialien wie CFK lange Standzeiten haben, also nur einem geringen Verschleiß unterliegen.

Die Aufgabe wird gelöst, indem ein Bohrwerkzeug mit den Merkmalen des Anspruchs 1 geschaffen wird. Dieses umfasst eine Spitze und einen - in Richtung einer Längsachse des Bohrwerkzeugs gesehen - gegenüber der Spitze angeordneten Schaft. Es weist im Bereich der Spitze mindestens eine geometrisch definierte Schneide auf. Der Spitze - in Richtung der Längsachse gesehen - nacheilend ist eine Durchmessererweiterung vorgesehen, wobei das Werkzeug einen der Durchmessererweiterung voreilenden ersten Bereich mit einem ersten Durchmesser, und einen der Durchmessererweiterung nacheilenden zweiten Bereich mit einem zweiten Durchmesser aufweist. Der zweite Durchmesser ist dabei größer als der erste Durchmesser. Das Bohrwerkzeug zeichnet sich dadurch aus, dass die Durchmessererweiterung und/oder der zweite Bereich so ausgebildet ist/sind, dass in dem Bereich der Durchmessererweiterung und/oder dem zweiten Bereich eine Spanbildung beim Bearbeiten eines Werkstücks erfolgt, die derjenigen bei einer Bearbeitung eines Werkstücks mit geometrisch unbestimmter Schneide entspricht. Wird also eine Bohrung mit Hilfe des Bohrwerkzeugs in ein Werkstück eingebracht, erfolgt in den genannten Bereichen bevorzugt eine schleif- oder honartige Bearbeitung. Hierdurch können insbesondere in zähen Materialien keine langen Späne entstehen, die gegebenenfalls Spanräume des Bohrwerkzeugs verstopfen und/oder die Bohrungsoberfläche beschädigen könnten. Außerdem werden die verschiedenen Schichten eines Verbundmaterials in den genannten Bereichen auf eine Weise bearbeitet, dass ihre verschiedene Elastizität oder andere verschiedene Eigenschaften, insbesondere Zerspanungseigenschaften, nicht mehr in einer Weise zum Tragen kommen, dass sich dies in verschiedenen Durchmessern der Bohrung nach der Bearbeitung niederschlagen würde. Das Bohrwerkzeug hat auch in sehr abrasiven Materialien wie CFK eine lange Standzeit.

Bevorzugt wird ein Bohrwerkzeug, bei dem die Differenz zwischen dem ersten und dem zweiten Durchmesser so gewählt ist, dass sich die entsprechende Spanbildung einstellt. Eine Bildung langer beziehungsweise großer Späne wird vermieden, indem der Betrag, um den sich der zweite Durchmesser von dem ersten Durchmesser unterscheidet, so gewählt wird, dass in dem Bereich der Durchmessererweiterung und bevorzugt im Bereich des zweiten Durchmessers von der mit dem ersten Durchmesser vorbearbeiteten Bohrungswandung nur noch kleine, bevorzugt staubförmige Partikel, abgetragen werden. Das Aufmaß der durch den Bereich des ersten Durchmessers vorbearbeiteten Bohrung relativ zum Endmaß der fertiggestellten Bohrung ist also so gering, dass ein im Wesentlichen schleifstaubförmiger Abtrag von Partikeln beim Bearbeiten eines Werkstücks in dem Bereich der Durchmessererweiterung und bevorzugt in dem zweiten Bereich gegeben ist. Es erfolgt dann in zumindest einem dieser Bereiche ein Materialabtrag, der eher mit dem eines Schleif- oder Honprozesses vergleichbar ist. Dieser kann weder Spanräume des Bohrwerkzeugs verstopfen noch die Bohrungsoberfläche beschädigen, insbesondere weil er problemlos abgeführt werden kann.

Bevorzugt wird ein Bohrwerkzeug, bei dem der Bereich der Durchmessererweiterung und der zweite Bereich keine geometrisch definierte Schneide aufweisen. In diesem Fall ist es nicht möglich, dass in dem Bereich der Durchmessererweiterung und/oder dem zweiten Bereich eine Spanbildung erfolgt, die derjenigen bei einer Bearbeitung eines Werkstücks mit geometrisch definierter Schneide entspricht. Stattdessen erfolgt bevorzugt in beiden Bereichen die bereits beschriebene Spanbildung, die derjenigen einer Bearbeitung mit geometrisch unbestimmter Schneide entspricht.

Es wird auch ein Bohrwerkzeug bevorzugt, bei dem der Bereich der Durchmessererweiterung und bevorzugt auch der zweite Bereich geometrisch unbestimmte Schneiden aufweisen. In diesem Fall ist es offensichtlich, dass bei der Bearbeitung eines Werkstücks hier eine Spanbildung auftritt, die durch die geometrisch unbestimmten Schneiden vorgegeben ist.

Es wird auch ein Bohrwerkzeug bevorzugt, welches zumindest im Bereich der Durchmessererweiterung und in dem zweiten Bereich eine Beschichtung aufweist. Dies kann bevorzugt eine Diamantbeschichtung sein. Die Beschichtung ist nicht unbedingt in dem gesamten Bereich des zweiten Durchmessers vorgesehen. Wesentlich ist dass sie den Bereich der Durchmessererweiterung und einen sich an diesen in Richtung auf den Schaft hin anschließenden Bereich umfasst.

Weiterhin wird ein Bohrwerkzeug bevorzugt, bei dem die Beschichtung in einem vorzugsweise ringförmigen Bereich vorgesehen ist, der bereichsweise den ersten Bereich, den Bereich der Durchmessererweiterung und bereichsweise den zweiten Bereich umfasst. Dabei umfasst die Beschichtung bevorzugt einen kleinen Teil des ersten und zweiten Bereichs, so dass - in Längsrichtung gesehen - ein vergleichsweise schmaler Ring gebildet wird. Auf diese Weise kann Beschichtungsmaterial eingespart werden, wobei zugleich die für die Bearbeitung wesentlichen Teil des Bohrers beschichtet sind. Besonders bevorzugt bleibt die Spitze des Bohrers unbeschichtet.

Besonders bevorzugt wird ein Bohrwerkzeug, bei dem die Durchmessererweiterung und der zweite Durchmesser durch die Beschichtung gebildet sind. Ein Grundkörper des Bohrwerkzeugs ist dann in dem ersten Bereich nicht oder nur dünn beschichtet. Entsprechend ist dann der Bereich der Durchmessererweiterung und der zweite Bereich beschichtet, und/oder die Beschichtung nimmt hinsichtlich ihrer Dicke in diesem Bereich so zu, dass die Durchmessererweiterung und der zweite Durchmesser für das Werkzeug gebildet werden. Insbesondere wenn die Beschichtung grobkörnig ausgebildet ist, beispielsweise eine grobe Diamantkörnung umfasst, sorgt die Beschichtung in diesem Bereich für einen Materialabtrag, der mit dem eines Schleif- oder Honprozesses vergleichbar ist.

Weitere Ausgestaltungen ergeben sich aus den Unteransprüchen.

Die Aufgabe wird auch gelöst, in dem ein Verfahren zur Herstellung von Bohrungen mit den Merkmalen des Anspruchs 7 geschaffen wird. Insbesondere zur Herstellung von Bohrungen in Verbundmaterialien kommt bevorzugt ein Bohrwerkzeug nach einem der Ansprüche 1 bis 20 zum Einsatz. Das bei dem Verfahren verwendete Bohrwerkzeug umfasst eine Spitze mit mindestens einer geometrisch definierten Schneide, einen Schaft, eine Längsachse, eine Durchmessererweiterung sowie einen spitzenseitigen, ersten Bereich mit einem ersten und einen schaftseitigen, zweiten Bereich mit einem zweiten Durchmesser. In bekannter Weise werden Werkzeug und Werkstück zur Herstellung der Bohrung relativ zueinander um die Längsachse des Werkzeugs gedreht und zugleich axial aufeinander zu bewegt. Typischerweise ist das Bohrwerkzeug drehangetrieben und wird beim Herstellen der Bohrung in axialer Richtung, also in Richtung seiner Längsachse, verlagert, während das Werkstück relativ zu einem raumfesten Koordinatensystem ruht. Hierauf kommt es jedoch nicht wesentlich an, entscheidend ist allein die Relativbewegung zwischen Werkstück und Werkzeug. Das Verfahren zeichnet sich dadurch aus, dass in dem Bereich der Durchmessererweiterung und/oder dem schaftseitigen Bereich eine Spanbildung beim Bearbeiten eines Werkstücks erfolgt, die derjenigen bei einer Bearbeitung eines Werkstücks mit geometrisch unbestimmter Schneide entspricht. Dies bedeutet, dass ein vergleichsweise feiner Materialabtrag realisiert wird, der bevorzugt eher dem Abtrag bei einem Schleifbeziehungsweise Honprozess entspricht. Es ergeben sich dabei die Vorteile, die bereits in Zusammenhang mit dem Bohrwerkzeug erläutert wurden.

Bevorzugt wird ein Verfahren, bei dem ein Vorschub des Bohrwerkzeugs relativ zu einem zu bearbeitenden Werkstück in Richtung der Längsachse beim Herstellen einer Bohrung so gewählt wird, dass der Vorschub pro Umdrehung und pro Schneide des Bohrwerkzeugs größer ist als die halbe Differenz zwischen dem zweiten und dem ersten Durchmesser. Der Vorschub ist also insbesondere größer als die Radiendifferenz zwischen dem ersten und dem zweiten Bereich. Insbesondere ist der Vorschub größer als die Höhe einer Stufe, die im Bereich der Durchmessererweiterung zwischen dem ersten Bereich und dem zweiten Bereich ausgebildet ist. Durch diese Wahl des Vorschubs werden die Bohrungsergebnisse insbesondere bezüglich der Genauigkeit und Toleranz von Bohrungen in Verbundmaterialien erheblich verbessert. Um den Vorschub des Bohrwerkzeugs pro Umdrehung und pro Schneide zu berechnen, wird der axiale Vorschub pro Umdrehung durch die Anzahl der Hauptschneiden im Bereich der Spitze geteilt.

Bevorzugt wird ein Verfahren, bei dem der Vorschub pro Umdrehung und Schneide größer ist als die Differenz zwischen dem zweiten und dem ersten Durchmesser. In diesem Fall ist der Vorschub also größer als der doppelte Radiensprung oder die doppelte Stufenhöhe im Bereich der Durchmessererweiterung.

Besonders bevorzugt wird schließlich ein Verfahren, bei dem eine Bohrung in einem Arbeitsgang fertiggestellt wird. Insbesondere ist nach der Herstellung der Bohrung mit dem Bohrwerkzeug keinerlei Nachbearbeitung, insbesondere kein Reiben mehr erforderlich. Die Bohrung weist nach einem einzigen Werkzeughub, also einem Eintauchen und Austauchen des Werkzeugs aus dem Material einen definierten Durchmesser auch in verschiedenen Lagen eines Verbundmaterials sowie eine enge Toleranz, vorzugsweise im Bereich IT8 gemäß ISO 286 oder besser auf.

Die Erfindung wird im Folgenden anhand der Figuren näher erläutert. Es zeigen:
- Figur 1: eine schematische Seitenansicht eines Bohrwerkzeugs;
- Figur 2: ein stark vergrößertes Detail des Bohrwerkzeugs gemäß Figur 1 im Bereich einer Durchmessererweiterung;
- Figur 3: eine schematische Seitenansicht eines zweiten Ausführungsbeispiels eines Bohrwerkzeugs; und
- Figur 4: eine schematische Querschnittsansicht einen dritten Ausführungsbeispiels eines Bohrwerkzeugs im Bereich eines zweiten Durchmessers.

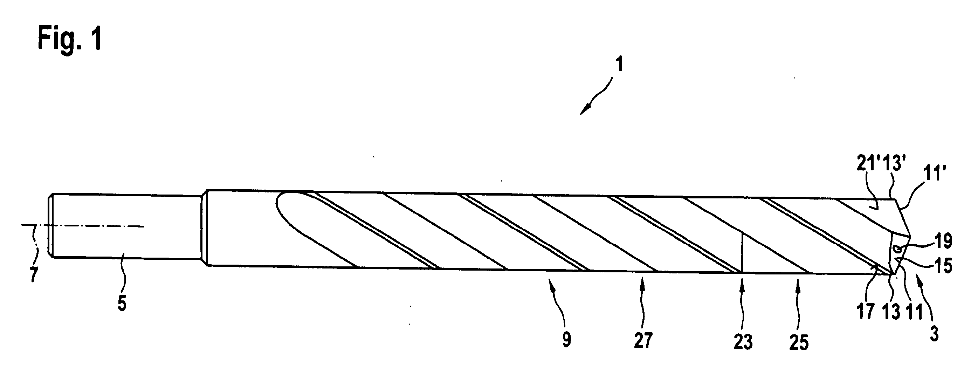

Figur 1 zeigt eine schematische Seitenansicht eines ersten Ausführungsbeispiels eines Bohrwerkzeugs 1. Dieses umfasst eine Spitze 3 und an einem gegenüberliegenden Ende einen Schaft 5, der bevorzugt dem Einspannen des Bohrwerkzeugs 1 in eine entsprechende Aufnahme einer Werkzeugmaschine dient. Um eine Bohrung in ein nicht dargestelltes Werkstück einzubringen, wird entweder das Werkstück oder das Bohrwerkzeug 1 um eine Längsachse 7 des Bohrwerkzeugs 1 gedreht. Zugleich werden das Werkstück und das Bohrwerkzeug 1 relativ zueinander in Richtung der Längsachse 7 aufeinander zu bewegt, sodass das Bohrwerkzeug 1 mit einem Bearbeitungsabschnitt 9 in das Werkstück eindringen und dort die Bohrung herstellen kann. Bevorzugt ruht das Werkstück relativ zu einem raumfesten Koordinatensystem, während das Bohrwerkzeug 1 um die Längsachse 7 drehangetrieben ist. Ebenfalls wird das Bohrwerkzeug 1 bevorzugt in Richtung der Längsachse 7 verlagert beziehungsweise vorgeschoben, damit der Bearbeitungsabschnitt 9 in das Werkstück eindringen kann. Letztlich ist allerdings ausschließlich die Relativbewegung zwischen dem Werkstück und dem Bohrwerkzeug 1 entscheidend.

Im Bereich der Spitze 3 weist das Bohrwerkzeug mindestens eine geometrisch definierte Schneide, vorzugsweise mindestens eine Hauptschneide und eine Nebenschneide, bei dem dargestellten Ausführungsbeispiel eine erste Hauptschneide 11 mit einer sich daran-in axialer Richtung gesehen - anschließenden Nebenschneide 13, sowie eine zweite Hauptschneide 11' mit einer entsprechenden Nebenschneide 13' auf. Es ist möglich, dass nur eine Schneide 11 und eine Nebenschneide 13 vorgesehen sind. Bei wieder anderen Ausführungsbeispielen sind mehr als zwei Hauptschneiden 11, 11' und mehr als zwei Nebenschneiden 13, 13' vorgesehen. Ist das Bohrwerkzeug 1 um die Längsachse 7 drehangetrieben, tritt bei dem dargestellten Ausführungsbeispiel ausgehend von der in Figur 1 dargestellten Position während einer Umdrehung die zweite Hauptschneide 11' aus der Bildebene hinaus und bewegt sich auf den Betrachter zu. Die erste Hauptschneide 11 taucht gleichzeitig in die Bildebene vom Betrachter weg ein.

In Figur 1 ist eine entgegen der Drehrichtung des Bohrwerkzeugs 1 abfallende Freifläche 15 dargestellt, deren Schnittkante mit einer nicht dargestellten Spanfläche die Hauptschneide 11 bildet. Dargestellt ist auch eine Nebenfreifläche 17, deren Schnittkante mit der nicht dargestellten Spanfläche die Nebenschneide 13 bildet. Bei einem bevorzugten Ausführungsbeispiel ist statt der Nebenfreifläche 17 eine Rundschlifffase vorgesehen, mit der sich das Bohrwerkzeug 1 in der Bohrung abstützt.

In der Freifläche 15 ist bevorzugt eine Öffnung 19 vorgesehen, in die ein hier nicht dargestellter, das Bohrwerkzeug 1 durchsetzender Kühl-/Schmiermittelkanal mündet. Durch diesen kann während der Bearbeitung eines Werkstücks Kühl-/Schmiermittel zugeführt werden, welches aus der Öffnung 19 austritt, um den Bereich der Spitze 3 zu kühlen und/oder zu schmieren. Zugleich werden durch die Kühl-/Schmiermittel-Strömung im Bereich der Hauptschneiden 11, 11' und Nebenschneiden 13, 13' gebildete Späne aus der Bohrung ausgetragen. Die hier für die Hauptschneide 11 und die Nebenschneide 13 erläuterte Anordnung der Freifläche 15, der Nebenfreifläche 17 und der Öffnung 19 ist vorzugsweise genauso auch im Bereich der Hauptschneide 11' und der Nebenschneide 13' vorgesehen. Auf eine separate Erläuterung wird daher verzichtet.

In Figur 1 ist noch eine Spanfläche 21' dargestellt, deren Schnittkante mit einer nicht dargestellten Freifläche die zweite Hauptschneide 11' bildet. Außerdem bildet eine Schnittkante der Spanfläche 21' mit einer ebenfalls nicht dargestellten Nebenfreifläche die Nebenschneide 13'. Eine entsprechende Spanfläche ist auch im Bereich der Hauptschneide 11 und der Nebenschneide 13 vorgesehen, wobei diese in Figur 1 nicht dargestellt ist.

Für das Bohrwerkzeug 1 sind verschiedene Geometrien, insbesondere Schneidengeometrien im Bereich der Spitze 3 möglich. Insbesondere sind dem Fachmann spezielle Geometrien bekannt, die zur Bearbeitung von Verbundmaterialien besonders geeignet sind. Der Fachmann wird hier ohne Weiteres eine bekannte, geeignete Geometrie auswählen, weshalb hierauf nicht weiter eingegangen wird. Wesentlich ist allerdings, dass im Bereich der Spitze 3 mindestens eine scharf geschliffene, geometrisch definierte Schneide, insbesondere eine scharf geschliffene Haupt- und eine scharf geschliffene Nebenschneide vorgesehen sind.

In Richtung der Längsachse 7, insbesondere in Vorschubrichtung gesehen, weist das Bohrwerkzeug 1 der Spitze 3 nacheilend eine Durchmessererweiterung 23 auf. Dabei ist von der Spitze 3 - in Längsrichtung gesehen - bis zu der Durchmessererweiterung 23 ein erster Bereich 25 mit einem ersten Durchmesser vorgesehen. Die Durchmessererweiterung 23 kann als Durchmessersprung oder als kontinuierliche Durchmessererweiterung ausgebildet sein, die sich über einen gewissen Bereich der axialen Länge des Bohrwerkzeugs 1 erstreckt. Dies wird im Folgenden noch näher erläutert. Jedenfalls umfasst die Durchmessererweiterung ein dem Schaft 5 zugewandtes Ende, an dem der Durchmesser des Bohrwerkzeugs 1 sich nicht weiter vergrößert. Von diesem Ende - in Längsrichtung gesehen - erstreckt sich in Richtung des Schafts 5 ein zweiter Bereich 27 mit einem zweiten Durchmesser. Dieser kann sich bei einem Ausführungsbeispiel bis zum Schaft 5 fortsetzen. Es ist aber bevorzugt auch möglich, dass der Bereich 27 sich von der Durchmessererweiterung 23 aus gesehen nur über einen gewissen Bereich der Längserstreckung des Bohrwerkzeugs 1 zum Schaft 5 hin erstreckt, wobei das Bohrwerkzeug 1 dann in dem verbleibenden Bereich zum Schaft 5 hin einen abweichenden Durchmesser, beispielsweise wiederum einen kleineren Durchmesser oder gegebenenfalls auch einen nochmals vergrößerten Durchmesser aufweisen kann.

Der zweite Durchmesser in dem zweiten Bereich 27 ist größer als der erste Durchmesser in dem ersten Bereich 25.

Die Durchmessererweiterung 23 und/oder der zweite Bereich 27 ist/sind so ausgebildet, dass hier eine Spanbildung beim Bearbeiten eines Werkstücks erfolgt, die derjenigen bei der Bearbeitung eines Werkstücks mit geometrisch unbestimmter Schneide entspricht.

Bevorzugt ist der zweite Durchmesser höchstens soviel größer als der erste Durchmesser, dass keine langen beziehungsweise großen Späne in dem zweiten Bereich 27 und in dem Bereich der Durchmessererweiterung 23 gebildet werden. Wenn also das Bohrwerkzeug 1 entlang der Längsachse 7 in ein Werkstück eintaucht, wird in dem ersten Bereich 25 zunächst eine Bohrung erzeugt, die ein Aufmaß in Hinblick auf die fertig zu stellende Bohrung aufweist. Das Material, welches dem Aufmaß entspricht, wird dann in dem Bereich der Durchmessererweiterung 23 beziehungsweise in dem zweiten Bereich 27 abgetragen, wenn das Bohrwerkzeug 1 weiter in das Werkstück eintaucht. Dabei ist die Differenz zwischen dem ersten und dem zweiten Durchmesser so gewählt, dass aufgrund des kleinen Aufmaßes bevorzugt ein im Wesentlichen schleifstaubförmiger Abtrag von Partikeln erfolgt, sodass die Bearbeitung dort eher einem Schleif- oder Honprozess vergleichbar ist. Die Durchmessererweiterung 23 und der sich - in axialer Richtung gesehen - anschließende Bereich 27 können daher auch als Schleifstufe bezeichnet werden. Der zweite Durchmesser ist bevorzugt zwischen 0 µm und ungefähr 60 µm, besonders bevorzugt zwischen ungefähr 10 µm bis 50 µm, ganz besonders bevorzugt um ungefähr 30 µm größer als der erste Durchmesser. Besonders bevorzugt wird auch ein Ausführungsbeispiel, bei dem eine Stufenhöhe der Durchmessererweiterung 23, also quasi ein Radiensprung zwischen dem Bereich 25 und dem Bereich 27 maximal 15 µm beträgt. Damit ist die Bearbeitungstiefe im Bereich der Durchmessererweiterung 23 beziehungsweise des Bereichs 27 ungefähr zehnmal kleiner als übliche Schnitttiefen beim Reiben.

Besonders bevorzugt wird der Wert, um den der zweite Durchmesser den ersten Durchmesser übersteigt, abhängig von einem zu bearbeitenden Verbundmaterial so gewählt, dass er etwa einem Wert der größten Durchmesserabweichung in den Materiallagen des Verbundmaterials entspricht, die beim Eindringen einer Bohrung in das Verbundmaterial mit einem Bohrwerkzeug ohne Durchmessererweiterung auftritt. Der Fachmann stellt also bei einem gegebenen, zu bearbeitenden Verbundmaterial zunächst fest, welche Durchmesserabweichung in den Materiallagen maximal auftritt, wenn das Material mit einem herkömmlichen Bohrwerkzeug bearbeitet wird, das keine Durchmessererweiterung aufweist. Zur Bearbeitung dieses Materials wählt der Fachmann dann ein Bohrwerkzeug 1 aus, bei dem die Differenz zwischen dem zweiten Durchmesser und dem ersten Durchmesser etwa dem ermittelten Wert der größten Durchmesserabweichung entspricht. Das Bohrwerkzeug 1 kann also bevorzugt auf ein bestimmtes Verbundmaterial beziehungsweise auf eine bestimmte Größe der Durchmesserabweichung in den Materiallagen abgestimmt sein. Dementsprechend ist es möglich, verschiedene Bohrwerkzeuge 1 für verschiedene Verbundmaterialien vorzusehen.

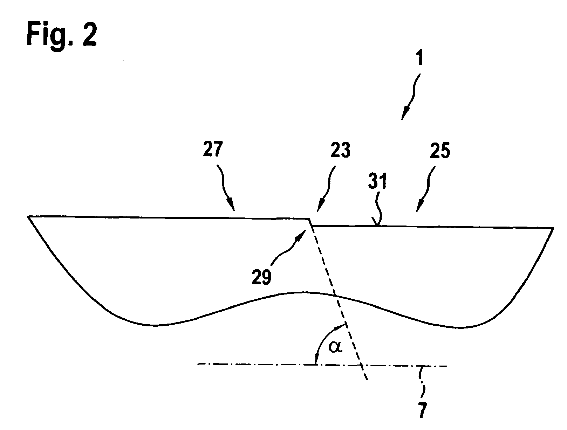

Figur 2 zeigt eine schematische, stark vergrößerte Detailansicht des Bohrwerkzeugs 1 gemäß Figur 1. Gleiche und funktionsgleiche Elemente sind mit gleichen Bezugszeichen versehen, sodass insoweit auf die vorangegangene Beschreibung verwiesen wird. Die Durchmessererweiterung 23 erstreckt sich - in axialer Richtung gesehenbevorzugt über einen Erweiterungsbereich 29. Dies bedeutet, dass sie nicht als abrupte, radiale Stufe ausgebildet ist, sondern eine gewisse Erstreckung entlang der Längsachse 7 aufweist. In dem Erweiterungsbereich 29 nimmt der Durchmesser des Bohrwerkzeugs 1 von der Spitze 3 bis zum Schaft 5 hin vorzugsweise kontinuierlich zu. Eine Umfangsfläche 31 des Bohrwerkzeugs 1 schließt im Erweiterungsbereich 29 bevorzugt mit der Längsachse 7 einen spitzen Winkel α ein. Dieser beträgt bevorzugt zwischen ungefähr 60° bis ungefähr 80°, besonders bevorzugt ungefähr 70°. Es hat sich gezeigt, dass die bei der Bearbeitung eines Werkstücks in den Bereich der Durchmessererweiterung 23 eingeleiteten Kräfte geringer sind, wenn der Winkel α spitzer beziehungsweise kleiner ist. Insbesondere wenn die Durchmessererweiterung 23 als radialer Durchmessersprung ausgebildet ist, also die Umfangsfläche 31 in diesem Bereich mit der Längsachse 7 einen Winkel von ungefähr 90° einschließt, ist hier eine hoch belastete Ecke ausgebildet, die starkem Verschleiß ausgesetzt ist. Ein spitzer oder kleinerer Winkel α kann also dazu beitragen, den Verschleiß in diesem Bereich zu vermindern. Dadurch wird eine längere Standzeit des Bohrwerkzeugs 1 erzielt. Insbesondere, wenn das Bohrwerkzeug 1 im Bereich der Durchmessererweiterung 23 beschichtet ist, kann ein Abtrag der Beschichtung durch einen kleineren Winkel α vermindert und damit ein Verschleiß verringert werden.

Bevorzugt erstreckt sich der Erweiterungsbereich 29 - in axialer Richtung gesehen - über eine Länge von 0 bis ungefähr 10 mm, besonders bevorzugt über eine Länge von ungefähr 3 mm bis ungefähr 7 mm, ganz besonders bevorzugt über eine Länge von ungefähr 5 mm. Umfasst die Durchmessererweiterung 23 in diesem letzten, ganz besonders bevorzugten Fall also eine Stufenhöhe beziehungsweise Radienerweiterung von 15 µm, nimmt der Radius des Bohrwerkzeugs 1 in dem Erweiterungsbereich 29 um 3 µm pro Millimeter zu.

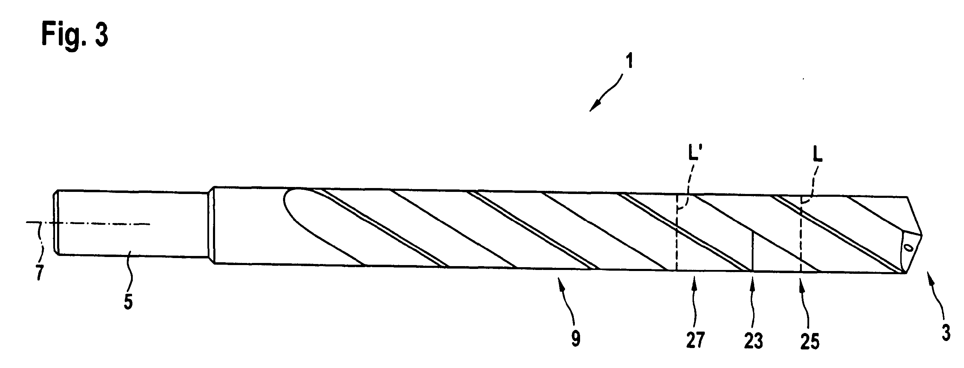

Figur 3 zeigt eine schematische Seitenansicht eines zweiten Ausführungsbeispiels eines Bohrwerkzeugs 1. Gleiche und funktionsgleiche Elemente sind mit gleichen Bezugszeichen versehen, so dass insofern auf die vorangegangene Beschreibung verwiesen wird. Das Bohrwerkzeug 1 in dem Ausführungsbeispiel gemäß Figur 3 weist zumindest im Bereich der Durchmessererweiterung 23 und bevorzugt auch in dem zweiten Bereich 27 zumindest bereichsweise eine Beschichtung auf. Bei dem dargestellten Ausführungsbeispiel erstreckt sich die Beschichtung von der Spitze 3 aus gesehen zum Schaft 5 hin von einer ersten gestrichelten Linie L bis zu einer zweiten gestrichelten Linie L'. Die Linien L, L' sind gedachte Linien, welche die Erstreckung der Beschichtung andeuten sollen.

Bei einem anderen Ausführungsbeispiel ist es möglich, das Bohrwerkzeug 1 zumindest im gesamten Bearbeitungsabschnitt 9 einschließlich der Spitze 3 zu beschichten. In diesem Fall muss allerdings gewährleistet werden, dass die Beschichtung im Bereich der Spitze 3 dünn, feinkörnig - wenn überhaupt gekörnt - und vergleichsweise glatt ist, damit die Schneiden in diesem Bereich scharf sind und eine Aufbauschneidenbildung vermieden wird. Außerdem muss ein störungsfreier Spanablauf gewährleistet sein.

Es wird bevorzugt, den Bereich der Spitze 3 nicht zu beschichten, damit dieser in jedem Fall schleifscharf bleibt.

Bevorzugt umfasst die Beschichtung eine Diamantbeschichtung oder ist als Diamantbeschichtung ausgebildet. Besonders bevorzugt ist die Beschichtung zumindest in dem Bereich der Durchmessererweiterung 23, vorzugsweise auch in dem Bereich 27 grobkörnig ausgebildet. Insbesondere ist es möglich, dass die Beschichtung in diesem Bereich eine grobe Diamantkörnung aufweist, damit an der Durchmessererweiterung 23 und in dem Bereich 27 ein besonders effizienter Materialabtrag erfolgt, der im Wesentlichen dem eines Schleif- oder Honprozesses entspricht. Die Körnung der Diamantbeschichtung stellt bevorzugt geometrisch unbestimmte Schneiden bereit.

Die Beschichtung kann auch bevorzugt insbesondere im Bereich der Durchmessererweiterung 23, aber auch in dem Bereich 27 als Verschleißschutzschicht ausgebildet sein.

Von der Durchmessererweiterung 23 zum Schaft 5 hin gesehen kann sich die Beschichtung - in axialer Richtung gesehen - beliebig weit erstrecken. Insbesondere muss die Beschichtung nicht wie in Figur 3 dargestellt bei der Linie L' enden. Andererseits ist eine Beschichtung in dem Bereich, der durch die Linien L, L' angedeutet ist, ausreichend und spart Material und damit Kosten. Besonders kostensparend kann vorgesehen sein, dass die Beschichtung quasi nur im Bereich der Durchmessererweiterung 23 vorgesehen ist beziehungsweise einige Millimeter axial vor der Durchmessererweiterung 23 beginnt und bevorzugt einige Millimeter hinter dieser endet. Wesentlich ist, dass aufgrund der vorzugsweise grobkörnigen Beschichtung im Bereich der Durchmessererweiterung 23 bevorzugt eine Schleifstufe mit geometrisch unbestimmten Schneiden gebildet wird.

Es zeigt sich Folgendes: Bevorzugt ist die Beschichtung in einem vorzugsweise ringförmigen Bereich vorgesehen, der bereichsweise den ersten Bereich 25, den Bereich der Durchmessererweiterung 23 und bereichsweise den zweiten Bereich 27 umfasst. Dabei erstreckt sich die ringförmige Beschichtung - in axialer Richtung gesehenvorzugsweise sowohl in den ersten als auch in den zweiten Bereich nur über eine kurze Strecke, besonders bevorzugt über wenige Millimeter. Bei einem anderen Ausführungsbeispiel ist es allerdings auch möglich, das sich die Beschichtung zumindest in dem zweiten Bereich 27 über eine längere Strecke, bevorzugt über den gesamten zweiten Bereich 27 erstreckt.

Im Bereich der Spitze 3 ist das Bohrwerkzeug 1 bevorzugt unbeschichtet, damit diese schleifscharf ausgebildet ist. Bei einem anderen Ausführungsbeispiel ist es jedoch möglich, dass das Bohrwerkzeug 1 im Bereich der Spitze 3 eine Beschichtung aufweist. Bevorzugt ist diese jedoch von der Beschichtung im Bereich der Durchmessererweiterung verschieden und besonders bevorzugt glatt ausgebildet. Insbesondere ist es möglich, die Beschichtung im Bereich der Spitze 3 dünn auszubilden. So ist gewährleistet, dass die mindestens eine geometrisch definierte Schneide im Bereich der Spitze 3 stets schleifscharf ist. Wesentlich ist dabei, dass die Beschichtung im Bereich der Spitze 3 sehr viel glatter ist als die Beschichtung im Bereich der Durchmessererweiterung 23.

Bevorzugt sind die Durchmessererweiterung 23 und der zweite Durchmesser durch die Beschichtung gebildet. Diese wird also auf eine Weise aufgetragen, dass ihre Dicke in dem Bereich der Durchmessererweiterung 23 zunimmt und schließlich in dem Bereich 27 den zweiten Durchmesser bereitstellt. Dabei kann insbesondere der Durchmesser eines Grundkörpers des Bohrwerkzeugs 1, auf den die Beschichtung aufgebracht wird, entlang der Längsachse 7 konstant sein. Ist die Beschichtung dann in dem Bereich der Durchmessererweiterung 23 und bevorzugt auch in dem zweiten Bereich 27 grobkörnig ausgebildet, beziehungsweise umfasst sie eine grobe Diamantkörnung, ist dort ein Materialabtrag gewährleistet, der dem eines Schleif- beziehungsweise Honprozesses, letztlich also einer Bearbeitung mit geometrisch unbestimmter Schneide entspricht.

Es ist möglich, dass der Grundkörper des Bohrwerkzeugs 1 von dem Bereich der Durchmessererweiterung 23 bis zu dem Schaft 5 hin eine zylindrische Geometrie aufweist. Es sind dann - abweichend von den in den Figuren dargestellten Ausführungsbeispielen - keine Nuten in dem Grundkörper vorgesehen. Diese sind letztlich für die eher schleif- beziehungsweise honartige Bearbeitung eines Werkstücks im Bereich der Durchmessererweiterung 23 und in dem zweiten Bereich 27 nicht unbedingt notwendig. Sie erleichtern jedoch einen Austrag von Materialpartikeln aus der Bohrung.

Für den Fachmann ist es offensichtlich, dass es im übrigen nicht darauf ankommt, ob die Nuten - wie in den Ausführungsbeispielen gemäß den Figuren 1 bis 4 - spiralförmig oder sich entlang der Längsachse 7 geradlinig erstreckend ausgebildet sind. Ausführungsbeispiele mit beiden Geometrien sind möglich.

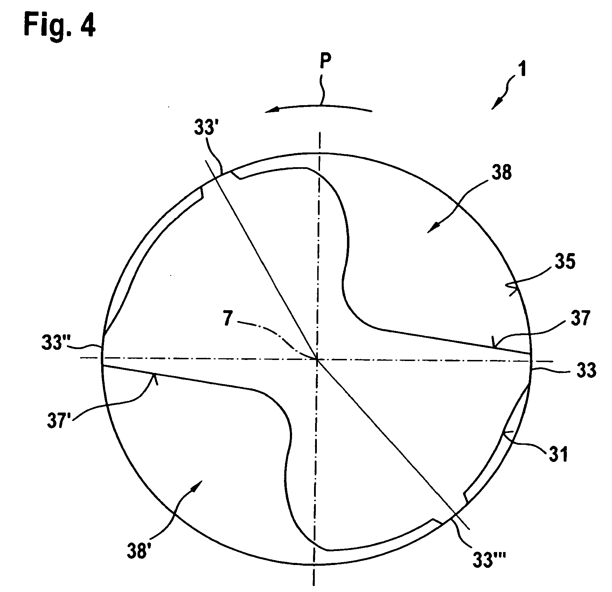

Figur 4 zeigt eine schematische Querschnittsansicht eines dritten Ausführungsbeispiels eines Bohrwerkzeugs 1, wobei die Schnittebene - von der Spitze 3 aus in Richtung der Längsachse 7 gesehender Durchmessererweiterung 23 nacheilend in dem Bereich 27 angeordnet ist. Gleiche und funktionsgleiche Elemente sind mit gleichen Bezugszeichen versehen, so dass insofern auf die vorangegangene Beschreibung verwiesen wird. In dem Bereich der Schnittebene sind mindestens zwei Schleifstollen, bei dem Ausführungsbeispiel gemäß Figur 4 vier Schleifstollen 33, 33', 33" und 33'" vorgesehen. Dabei sind die Schleifstollen 33, 33" durch Flächen gebildet, die quasi den Nebenfreiflächen im Bereich der Spitze 3 entsprechen, wobei im Ausführungsbeispiel gemäß Figur 4 an der Spitze 3 zwei Hauptschneiden und zwei Nebenschneiden mit entsprechend zwei Nebenfreiflächen vorgesehen sind. Im Unterschied zu der Spitzengeometrie, wo scharf geschliffene, geometrisch definierte Nebenschneiden vorgesehen sind, tragen jedoch die Schleifstollen 33, 33' quasi mit ihrer gesamten Fläche Material von einer Bohrungswandung 35 ab. In dem Bereich der Durchmessererweiterung 23 und in dem zweiten Bereich 27 sind demnach bevorzugt keine geometrisch definierten Schneiden vorgesehen. Insbesondere umfassen die Schleifstollen 33, 33', 33", 33"' keine geometrisch definierte Schneide. Bevorzugt umfassen sie geometrische unbestimmte Schneiden, beispielsweise eine grobkörnige Beschichtung.

Es ist allerdings ein Ausführungsbeispiel möglich, bei dem auch in dem Bereich der Durchmessererweiterung 23 und/oder in dem Bereich 27 zumindest eine geometrisch definierte Schneide vorgesehen ist. Auch in diesem Fall erfolgt in den genannten Bereichen allerdings eine Spanbildung, die derjenigen bei einer Bearbeitung mit geometrisch unbestimmter Schneide entspricht, weil sich der erste und der zweite Durchmesser nur um einen entsprechend geringen Betrag unterscheiden. Bevorzugt sind jedoch geometrisch unbestimmte Schneiden in den genannten Bereichen vorgesehen, so dass schon aus diesem Grund eine entsprechende Spanbildung erfolgt. Der Materialabtrag wird vorzugsweise durch eine bevorzugt grobkörnige Beschichtung bewirkt.

Es wird ein Ausführungsbeispiel bevorzugt, bei dem im Bereich der Spitze 3 mindestens eine geometrisch definierte Schneide und im Bereich der Durchmessererweiterung und dem zweiten Bereich keine geometrisch definierte Schneide, sondern geometrisch unbestimmte Schneiden vorgesehen sind. Zugleich ist vorzugsweise die Differenz zwischen dem ersten und dem zweiten Durchmesser sehr viel kleiner gewählt als es der normalen Bearbeitungstiefe beispielsweise beim Reiben entspricht. Die Stufenhöhe der Durchmessererweiterung 23, also quasi der Radiensprung zwischen dem ersten Bereich 25 und dem zweiten Bereich 27 umfasst dabei bevorzugt einen Wert aus einem der bereits genannten Wertebereiche.

In Figur 4 sind Flächen 37, 37' dargestellt, die der in Figur 1 dargestellten Spanfläche 21' und der dort nicht dargestellten, der Hauptschneide 11 zugeordneten Spanfläche entsprechen. Ebenso sind hier Nuten 38, 38' dargestellt, die sich zur Spitze 3 hin in die Spannuten des Bohrwerkzeugs 1 fortsetzen. In dem in Figur dargestellten Bereich werden die Nuten 38, 38' allerdings nicht als Spannuten bezeichnet, weil hier keine spanabtragende Bearbeitung erfolgt. Gleichwohl können sich von der Bohrungswand 35 abgetragene, im Wesentlichen schleifstaubförmige Partikel in den Nuten 38, 38' sammeln und durch diese aus der Bohrung ausgetragen beziehungsweise gegebenenfalls durch Kühl-/Schmiermittel ausgespült werden, welches von der Spitze 3 her durch die Nuten 38, 38' strömt.

Wie bereits erläutert, kommt es nicht darauf an, ob die Spannuten beziehungsweise Nuten 38, 38' spiralförmig an dem Bohrwerkzeug 1 vorgesehen sind, oder ob sie sich geradlinig in Richtung der Längsachse 7 erstrecken. Ausführungsbeispiel mit beiden Geometrien sind möglich, wobei in den Figuren 1 bis 4 nur Ausführungsbeispiele dargestellt sind, die spiralförmige Spannuten beziehungsweise Nuten 38, 38' umfassen.

Die Drehrichtung des Bohrwerkzeugs 1 während der Bearbeitung eines Werkstücks ist in Figur 4 durch den Pfeil P dargestellt.

Die Umfangsfläche 31 springt - entgegen der Umdrehungsrichtung und in radialer Richtung gesehen - ausgehend von den Schleifstollen 33, 33" zurück. Den Schleifstollen 33, 33" - entgegen der Umdrehungsrichtung in Umfangsrichtung gesehen - nacheilend sind Schleifstollen 33', 33'" ausgebildet, in deren Bereich die Umfangsfläche 31 - in radialer Richtung gesehen - wiederum vorspringt, so dass hier Material von der Bohrungswandung 35 abgetragen wird. Den Schleifstollen 33', 33"' - wiederum in Umfangsrichtung gesehen - nacheilend springt die Umfangsfläche 31 - in radialer Richtung gesehen - zurück, bis sie schließlich in die Nuten 38, 38' übergeht. Die Schleifstollen 33', 33'" können sich auch über die Durchmessererweiterung 23 hinaus zur Spitze 3 hin fortsetzen und in dem ersten Bereich 25 beziehungsweise im Bereich der Spitze 3 als Stützfasen ausgebildet sein. Selbstverständlich erfolgt in diesem Bereich kein Materialabtrag durch die Stützfasen, die dort nur einer Zentrierung und Führung des Bohrwerkzeugs 1 dienen.

Bevorzugt weisen die Schleifstollen 33, 33', 33", 33"' - in Umfangsrichtung gesehen - einen ungleichen Winkelabstand auf. So kann insbesondere ein Rattern des Bohrwerkzeugs 1 vermieden werden. Auch bei Ausführungsbeispielen, bei denen das Bohrwerkzeug 1 lediglich zwei Schleifstollen 33, 33" aufweist, liegen diese einander bevorzugt nicht diametral gegenüber. In Figur 4 ist deutlich zu erkennen, dass sich jedenfalls die Schleifstollen 33' und 33"' nicht diametral gegenüberliegen. Insbesondere weist der Schleifstollen 33'" zu dem Schleifstollen 33 einen kleineren Winkelabstand auf als der Schleifstollen 33' zu dem Schleifstollen 33". Bevorzugt wird eine ungleiche Winkelteilung, bei der wenigstens ein zweiter Schleifstollen einem ersten Schleifstollen um einen Winkel nacheilt, der verschieden ist von dem Winkel, um den ein dritter Schleifstollen dem zweiten Schleifstollen nacheilt. Anders ausgedrückt ist also bei einem Bohrwerkzeug 1, welches mindestens drei Schleifstollen umfasst, wenigstens ein Schleifstollen von seiner symmetrischen Position aus - in Umfangsrichtung gesehen - so versetzt, dass sich keine symmetrische beziehungsweise gleiche Winkelteilung mehr ergibt. Das gleiche gilt für ein Bohrwerkzeug 1 mit vier oder mehr Schleifstollen. Ganz besonders bevorzugt sind alle Winkel zwischen je zwei Schleifstollen verschieden.

Ein bevorzugtes Ausführungsbeispiel eines Bohrwerkzeugs 1 umfasst drei Schleifstollen, wobei ein Schleifstollen einem anderen Schleifstollen - in Umfangsrichtung gesehen - um ungefähr 30° bis ungefähr 50°, bevorzugt um ungefähr 35° bis ungefähr 45°, besonders bevorzugt um ungefähr 40° nacheilt. Ein solches Bohrwerkzeug 1 hat sich als besonders wenig anfällig gegen Rattern erwiesen. Letztlich kann so die Oberflächenqualität der mit dem Bohrwerkzeug 1 hergestellten Bohrung gesteigert werden.

Die bisher beschriebenen bevorzugten Ausführungsbeispiele des Bohrwerks 1 sind vorzugsweise einstückig ausgebildet. Ein anderes Ausführungsbeispiel eines Bohrwerkzeugs 1 kann mehrstückig, insbesondere zweistückig ausgebildet sein. Dabei ist bevorzugt der erste Bereich 25 als Bohrer ausgebildet, während der zweite Bereich 27 und der Bereich der Durchmessererweiterung 23 als Schleifwerkzeug, vorzugsweise als eine Art Schleifstein ausgebildet sind. Das zusammengesetzte Bohrwerkzeug 1 kann vorzugsweise mit Hilfe von an sich bekannten Schnittstellen aus den beiden Teilwerkzeugen zusammengefügt werden. Letztlich sind auch mehrteilige Bohrwerkzeuge möglich. Beispielsweise kann im Bereich der Spitze 3 mindestens ein Schneideinsatz vorgesehen sein, an dem die mindestens eine geometrisch definierte Schneide angeordnet ist.

Im Folgenden wird das Verfahren zum Herstellen von Bohrungen näher erläutert. Das Verfahren wird bevorzugt mit Hilfe eines Bohrwerkzeugs gemäß den vorstehenden Erläuterungen durchgeführt. Jedenfalls umfasst das Bohrwerkzeug 1 eine Spitze 3 mit mindestens einer Schneide, einen Schaft 5, eine Längsachse 7, eine Durchmessererweiterung 23 sowie einen spitzenseitigen Bereich 25 mit einem ersten Durchmesser und einen schaftseitigen Bereich 27 mit einem zweiten Durchmesser. In dem Bereich der Durchmessererweiterung 23 und/oder dem schaftseitigen Bereich 27 erfolgt eine Spanbildung beim Bearbeiten eines Werkstücks, die derjenigen bei einer Bearbeitung eines Werkstücks mit geometrisch unbestimmter Schneide entspricht.

Der axiale Vorschub des Bohrwerkzeugs 1 pro Umdrehung und Schneide relativ zu einem zu bearbeitenden Werkstück wird so gewählt, dass er größer ist als die halbe Differenz zwischen dem zweiten und dem ersten Durchmesser. Der Vorschub ist also größer als die Radiendifferenz zwischen dem Bereich 27 und dem Bereich 25.

Besonders bevorzugt ist der Vorschub pro Umdrehung und pro Schneide größer als die Durchmesserdifferenz zwischen dem Bereich 27 und dem Bereich 25.

Durch die entsprechende Wahl des Vorschubs kann die Oberflächenqualität der Bohrung beziehungsweise die Genauigkeit des Durchmessers entlang verschiedener Schichten eines bearbeiteten Verbundmaterials sowie die Tolerierung der Bohrung verbessert werden.

Ganz besonders bevorzugt wird die Bohrung in einem Arbeitsgang fertiggestellt. Zur Herstellung der Bohrung taucht das Bohrwerkzeug 1 also einmal in das Werkstück ein und wieder aus diesem heraus. Die Bohrung weist anschließend die gewünschte Tolerierung und damit einen genau definierten Durchmesser auch in den verschiedenen Schichten eines Verbundmaterials auf. Es bedarf also keiner weiteren Bearbeitungsschritte, insbesondere keines anschließenden Reibens. Dabei ist es besonders bevorzugt möglich, in einem Arbeitsgang, also während eines Arbeitshubs des Werkzeugs eine Bohrung herzustellen, die eine Toleranz im Bereich IT8 gemäß ISO 286 oder besser aufweist.

Das Verfahren wird vorzugsweise mit einem Bohrwerkzeug 1 nach den vorstehenden Erläuterungen, insbesondere den Ausführungsbeispielen gemäß den Figuren 1 bis 4 durchgeführt. In diesem Fall findet im Bereich der Durchmessererweiterung 23 beziehungsweise in dem Bereich 27 eine Bearbeitung statt, die derjenigen mit geometrisch unbestimmter Schneide entspricht. Es erfolgt hier ein Materialabtrag, der eher dem eines Schleif- beziehungsweise Honprozesses gleicht.

Bei der Herstellung einer Bohrung mit dem Bohrwerkzeug 1 beziehungsweise mit Hilfe des Verfahrens können sich verschiedene physikalische Parameter beziehungsweise Zerspanungseigenschaften verschiedener Schichten eines Verbundmaterials nicht in der gleichen Weise negativ bezüglich der Tolerierung der Bohrung auswirken, wie dies bei herkömmlichen Werkzeugen der Fall ist, weil der Materialabtrag zur Fertigung des Endmaßes der Bohrung nicht wie bei einer Bearbeitung mit geometrisch definierter Schneide, sondern nach Art eines Schleif- beziehungsweise Honprozesses erfolgt. Dadurch kann in einem einzigen Arbeitsgang eine Bohrung hergestellt werden, die bezüglich ihrer Durchmessertolerierung sogar genauer ist als eine Bohrung, die mit herkömmlichen Werkzeugen zunächst vorgebohrt und danach in einem zweiten Arbeitsgang fertig gerieben wird. Durch den Schleif- beziehungsweise honähnlichen Abtrag in dem Bereich des Bohrwerkzeugs 1, welcher die Bohrung auf Endmaß bearbeitet, können keine langen Späne zähen Materials entstehen, welche die Spanräume des Bohrwerkzeugs 1 verstopfen und/oder die Bohrungsoberfläche beschädigen. Aufgrund der höchstens sehr kleinen Späne beziehungsweise dem schleifstaubähnlichen Abtrag, der bei der Bearbeitung der Bohrung auf Endmaß entsteht, weist das Werkzeug auch in sehr abrasiven faserverstärkten Materialien wie beispielsweise CFK lange Standzeiten und einen geringen Verschleiß auf.

## Patentansprüche

1. Bohrwerkzeug zur Herstellung von Bohrungen mit
- einer Spitze (3) und einem - in Richtung einer Längsachse (7) des Bohrwerkzeugs gesehen - gegenüber der Spitze (3) angeordneten Schaft (5), wobei
- das Bohrwerkzeug (1) im Bereich der Spitze (3) mindestens eine geometrisch definierte Schneide aufweist, und mit
- einer - von der Spitze (3) aus in Längsrichtung gesehen - der Spitze (3) nacheilenden Durchmessererweiterung (23), wobei das Bohrwerkzeug (1) einen der Durchmessererweiterung (23) voreilenden ersten Bereich (25) mit einem ersten Durchmesser, und einen der Durchmessererweiterung (23) nacheilenden zweiten Bereich (27) mit einem zweiten Durchmesser aufweist, wobei
- der zweite Durchmesser größer ist als der erste Durchmesser, wobei
- die Durchmessererweiterung (23) und/oder der zweite Bereich (27) so ausgebildet ist/sind, dass in dem Bereich der Durchmessererweiterung (23) und/oder dem zweiten Bereich (27) eine Spanbildung beim Bearbeiten eines Werkstücks erfolgt, die derjenigen bei einer Bearbeitung eines Werkstücks mit geometrisch unbestimmter Schneide entspricht
**dadurch gekennzeichnet, dass**
- das Bohrwerkzeug (1) einen mit Nuten versehenen Grundkörper aufweist, wobei

2. Bohrwerkzeug nach Anspruch 1, **dadurch gekennzeichnet, dass** der Bereich der Durchmesserweiterung (23) und der zweite Bereich (27) keine geometrisch definierte Schneide aufweisen.

3. Bohrwerkzeug nach einem der vorhergehenden Ansprüche, **dadurch gekennzeichnet, dass** der Bereich der Durchmesserweiterung (23) und/oder der zweite Bereich (27) geometrisch unbestimmte Schneiden aufweisen.

4. Bohrwerkzeug nach einem der vorhergehenden Ansprüche, **dadurch gekennzeichnet, dass** der zweite Durchmesser zwischen 0 µm und 60 µm größer ist als der erste Durchmesser.

5. Bohrwerkzeug nach einem der vorhergehenden Ansprüche, **dadurch gekennzeichnet, dass** der Wert, um den der zweite Durchmesser den ersten Durchmesser übersteigt, abhängig von einem zu bearbeitenden Verbundmaterial so gewählt ist, dass er etwa einem Wert der größten Durchmesserabweichung in den Materiallagen des Verbundmaterials entspricht, die beim Einbringen einer Bohrung in das Verbundmaterial mit einem Bohrwerkzeug ohne Durchmessererweiterung auftritt.

6. Bohrwerkzeug nach einem der vorhergehenden Ansprüche, **dadurch gekennzeichnet, dass** das Bohrwerkzeug (1) zumindest in einem Bereich, welcher der Durchmessererweiterung - in axialer Richtung gesehen - nacheilt, mindestens zwei Schleifstollen (33,33',33",33"') umfasst.

7. Verfahren zur Herstellung von Bohrungen in Verbundmaterialien und insbesondere mit Hilfe eines Bohrwerkzeugs (1) nach einem der Ansprüche 1 bis 6, wobei das Bohrwerkzeug (1) eine Spitze (3) mit mindestens einer geometrisch definierten Schneide, einen Schaft (5), eine Längsachse (7), eine Durchmessererweiterung (23) sowie einen spitzenseitigen Bereich (25) mit einem ersten und einen schaftseitigen Bereich (27) mit einem zweiten Durchmesser ufweist,
wobei in dem Bereich der Durchmessererweiterung (23) und/oder dem schaftseitigen Bereich (27) eine Spanbildung beim Bearbeiten eines Werkstücks erfolgt, die derjenigen bei einer Bearbeitung eines Werkstücks mit geometrisch unbestimmter Schneide entspricht, **dadurch gekennzeichnet, dass** das Bohrwerkzeug (1) einen mit Nuten versehenen Grundkörper aufweist.

8. Verfahren nach Anspruch 7, **dadurch gekennzeichnet, dass** ein Vorschub des Bohrwerkzeugs (1) relativ zu einem zu bearbeitenden Werkstück in Richtung der Längsachse (7) beim Herstellen einer Bohrung so gewählt wird, dass der Vorschub pro Umdrehung und pro Schneide des Bohrwerkzeugs (1) größer ist als die halbe Differenz zwischen dem zweiten und dem ersten Durchmesser.

9. Verfahren nach Anspruch 7 oder 8, **dadurch gekennzeichnet, dass** die Differenz zwischen dem ersten Durchmesser im ersten Bereich (25) und dem zweiten Durchmesser im zweiten Bereich (27) wie folgt festgelegt ist:
- in ein Verbundmaterial, das mit dem Bohrwerkzeug bearbeitet werden soll, wird mittels eines Bohrwerkzeugs ohne Durchmessererweiterung eine Bohrung eingebracht,
- es wird der Wert der größten Durchmesserabweichung in den Materiallagen des Verbundwerkstoffs ermittelt,
- es wird die Differenz zwischen dem ersten und zweiten Durchmesser so gewählt, dass der zweite Durchmesser um den ermittelten Wert größer ist als der erste Durchmesser.

## Claims

1. Drilling tool for producing drill holes, having
- a tip (3) and a shaft (5) arranged opposite the tip (3) as seen in the direction of a longitudinal axis (7) of the drilling tool, wherein
- the drilling tool (1) has in the area of the tip (3) at least one geometrically defined cutting edge, and having,
- trailing the tip (3), as seen in the longitudinal direction from the tip (3), an expanded diameter (23), the drilling tool (1) having a first area (25) that precedes the expanded diameter (23) and that has a first diameter, and a second area (27) that trails the expanded diameter (23) and that has a second diameter, wherein
- the second diameter is larger than the first diameter, wherein
- the expanded diameter (23) and/or the second area (27) is/are embodied such that a chip formation occurs in the area of the expanded diameter (23) and/or in the second area (27) when a workpiece is machined, said chip formation being consistent with the chip formation occurring when a workpiece is machined with a geometrically undefined cutting edge,
**characterized in that**
- the drilling tool (1) includes a base body provided with grooves.

2. Drilling tool according to claim 1, **characterized in that** the area of the expanded diameter (23) and the second area (27) do not have a geometrically defined cutting edge.

3. Drilling tool according to any of the foregoing claims, **characterized in that** the area of the expanded diameter (23) and/or the second area (27) have geometrically undefined cutting edges.

4. Drilling tool according to any of the foregoing claims, **characterized in that** the second diameter is between 0 µm and 60 µm larger than the first diameter.

5. Drilling tool according to any of the foregoing claims, **characterized in that**, depending on a composite material to be machined, the value by which the second diameter exceeds the first diameter is selected such that it approximately corresponds to a value for the largest diameter deviation in the material layers of the composite material that occurs when adding a drill hole to the composite material with a drilling tool that does not have an expanded diameter.

6. Drilling tool according to any of the foregoing claims, **characterized in that**, at least in one area that trails the expanded diameter, as seen in the axial direction, the drilling tool (1) includes at least two grinding studs (33,33',33",33"').

7. Method for producing drill holes in composite materials and especially using a drilling tool (1) according to any of claims 1 through 6, the drilling tool (1) having a tip (3) with at least one geometrically defined cutting edge, a shaft (5), a longitudinal axis (7), an expanded diameter (23), and a tip-side area (25) with a first diameter and having a shaft-side area (27) with a second diameter, wherein a chip formation occurs in the area of the expanded diameter (23) and/or in the shaft-side area (27) when a workpiece is machined, said chip formation being consistent with the chip formation occurring when a workpiece is machined with a geometrically undefined cutting edge, **characterized in that** the drilling tool (1) includes a base body provided with grooves.

8. Method according to claim 7, **characterized in that** an advance of the drilling tool (1) relative to a workpiece to be machined in the direction of the longitudinal axis (7) when producing a drill hole is selected such that the advance per revolution and per cutting edge of the drilling tool (1) is greater than half the difference between the second diameter and the first diameter.

9. Method according to claim 7 or 8, **characterized in that** the difference between the first diameter in the first area (25) and the second diameter in the second area (27) is determined as follows:
- a drill hole is added by means of a drilling tool to a composite material that is to be machined with the drilling tool without the diameter being expanded,
- the value of the greatest diameter deviation in the material layers of the composite material is determined,
- the difference between the first diameter and the second diameter is selected such that the second diameter is greater than the first diameter by the value determined.

## Revendications

1. Outil d'alésage pour la fabrication des alésages, avec
- une pointe (3) et une tige (5) opposée à la pointe (3) vue dans la direction d'un axe longitudinal (7) de l'outil d'alésage,
- l'outil d'alésage (1) présentant, au niveau de la pointe (3), au moins une lame définie de manière géométrique, et avec
- une extension de diamètre (23) en retard de la pointe (3) - vue dans la direction longitudinale à partir de la pointe (3), l'outil d'alésage (1) ayant une première région (25) avec un premier diamètre à l'avance de l'extension de diamètre (23), et une seconde région (27) avec un second diamètre en retard de l'extension de diamètre (23),
- le second diamètre étant plus grand que le premier diamètre,
- l'extension de diamètre (23) et/ou la seconde région (27) étant configurés de telle manière que, pendant l'usinage d'une pièce, une formation des copeaux correspondant à celle-ci pendant l'usinage d'une pièce avec une lame géométriquement indéterminée, s'effectue dans la région de l'extension de diamètre (23) et/ou la seconde région (27),
**caractérisé en ce que**
- l'outil d'alésage (1) présente un corps de base muni des rainures.

2. Outil d'alésage selon la revendication 1, **caractérisé en ce que** la région de l'extension de diamètre (23) et la seconde région (27) ne présentent pas des lames définies de manière géométrique.

3. Outil d'alésage selon l'une quelconque des revendications précédentes, **caractérisé en ce que** la région de l'extension de diamètre (23) et/ou la seconde région (27) présentent des lames géométriquement indéterminées.

4. Outil d'alésage selon l'une quelconque des revendications précédentes, **caractérisé en ce que** le second diamètre est plus grand que le premier diamètre d'une valeur entre 0 µm et 60 µm.

5. Outil d'alésage selon l'une quelconque des revendications précédentes, **caractérisé en ce que** la valeur, de laquelle le second diamètre dépasse le premier diamètre, est choisi en fonction d'un matériau composite à usiner, de telle manière qu'elle correspond approximativement à une valeur de la plus grande divergence de diamètre dans les couches du matériau composite qui se produit lorsqu'on effectue un alésage dans le matériau composite en utilisant un outil d'alésage sans extension de diamètre.

6. Outil d'alésage selon l'une quelconque des revendications précédentes, **caractérisé en ce que** l'outil d'alésage (1) comprend au moins deux dents de meulage (33, 33', 33", 33"'), d'au moins dans une région en retard de l'extension de diamètre, vue dans la direction axiale.

7. Procédé pour la fabrication des alésages dans des matériaux composites, notamment à l'aide d'un outil d'alésage (1) selon l'une quelconque des revendications 1 à 6, l'outil d'alésage (1) ayant une pointe (3) avec au moins une lame définie de manière géométrique, une tige (5), un axe longitudinal (7), une extension de diamètre (23) et une région du côté de pointe (25) avec un premier diamètre et une région du côté de tige (27) avec un second diamètre, dans lequel s'effectue, dans la région de l'extension de diamètre (23) et/ou la région du côté de tige (27) et pendant l'usinage d'une pièce, une formation des copeaux correspondant à celle-ci pendant l'usinage d'une pièce avec une lame géométriquement indéterminée, **caractérisé en ce que** l'outil d'alésage (1) présente un corps de base muni des rainures.

8. Procédé selon la revendication 7, **caractérisé en ce que,** lorsqu'on effectue un alésage, un avancement de l'outil d'alésage (1) dans la direction de l'axe longitudinal (7) par rapport à une pièce à usiner est choisi de telle manière que l'avancement par révolution et par lame de l'outil d'alésage (1) est plus grand que la moitié de la différence entre le second et le premier diamètre.

9. Procédé selon la revendication 7 ou 8, **caractérisé en ce que** la différence entre le premier diamètre dans la première région (25) et le second diamètre dans la seconde région (27) est établie de la manière suivante :
- dans un matériau composite à usiner avec l'outil d'alésage, on effectue un alésage au moyen d'un outil d'alésage sans extension de diamètre,
- on détermine la valeur de la plus grande divergence de diamètre dans les couches du matériau composite,
- la différence entre le premier et le second diamètre est choisi de telle manière que le second diamètre est supérieur au premier diamètre de la valeur déterminée.
